# EUROPÄISCHE PATENTANMELDUNG

(11) **EP 2 127 575 A1**
(43) Veröffentlichungstag der Anmeldung: **02.12.2009**
(21) Anmeldenummer: 09005136.8
(22) Anmeldetag: 08.04.2009
(51) Int. Cl.: A47J 37/06

(54) **Grillrost**

(30) Priorität: 10.04.2008 DE 202008005018 U
(71) Anmelder: Schuller, Karin, 74343 Sachsenheim (DE); Schuller, Monika, 74343 Sachsenheim (DE)
(72) Erfinder: Schuller, Karin, 74343 Sachsenheim (DE); Schuller, Monika, 74343 Sachsenheim (DE)
(74) Vertreter: Fleck, Hermann-Josef

(57) **Zusammenfassung**

Die Erfindung bezieht sich auf einen Grillrost aus einem oder mehreren Gussteilen in rippenartiger Struktur mit erhabenen Auflageabschnitten (10) für das Grillgut (2) und in Breitenrichtung jeweils dazwischen liegenden Rinnenabschnitten (20) zum Auffangen abtropfenden Fettes (4) sowie in Übergangsabschnitten (21, 21') in einem Flankenbereich zwischen den Auflageabschnitten (10) und den Rinnenabschnitten (20) angeordneten Durchbrüchen (40) zum Herstellen einer Strömungsverbindung für von der Glut (3) aufsteigende Gase (5) zur Oberseite des Grillrostes (1), wobei die Durchbrüche (40) untere Ränder mit oberen Auffangkanten (42) und von diesen vertikal beabstandete und sie quer zu den Rinnenabschnitten (20) in Gebrauchslage in horizontaler Richtung zum Ableiten des Fettes in den jeweiligen Rinnenabschnitt überlappende, auflageseitige obere Ränder mit unteren Tropfkanten (43) aufweisen, wobei die beiden sich jeweils gegenüberliegenden, eine Rinne seitlich begrenzenden oberen Flächen der Übergangsabschnitte (21, 21') nach oben zur Öffnungsseite der Rinne hin zunehmend voneinander beabstandet sind und wobei die beiden sich jeweils gegenüberliegenden unteren Flächen der eine Rinne seitlich begrenzenden Übergangsabschnitte (21, 21') nach unten zunehmend voneinander beabstandet sind. Eine günstige Herstellung des Grillrostes, bei dem ein Abtropfen von Fett in die Glut vermieden wird, wird dadurch erreicht, dass im Bereich der Durchbrüche (40) über deren Ausdehnung in Längsrichtung der Rinne die Abstandslinie (46) zwischen Auffangkante (42) und Tropfkante (43) in einer vertikalen Querebene des Grillrostes im Gebrauchszustand um einen Kippwinkel (α) von höchstens 45° gegen die Flächennormale (n1) geneigt ist, wobei die Abstandslinie (46) von der oberen Fläche des gegenüberliegenden Übergangsabschnittes (21') nach oben hin zunehmend beabstandet ist und von der gegenüberliegenden unteren Fläche des benachbarten Übergangsabschnittes (21') nach unten hin zunehmend beabstandet ist (Fig. 1).

## Beschreibung

Die Erfindung bezieht sich auf einen Grillrost aus einem oder mehreren Gussteilen in rippenartiger Struktur mit erhabenen Auflageabschnitten für das Grillgut und in Breitenrichtung jeweils dazwischen liegenden Rinnenabschnitten zum Auffangen abtropfenden Fettes sowie in Übergangsabschnitten in einem Flankenbereich zwischen den Auflageabschnitten und den Rinnenabschnitten angeordneten Durchbrüchen zum Herstellen einer Strömungsverbindung für von der Glut aufsteigende Gase zur Oberseite des Grillrostes, wobei die Durchbrüche untere Ränder mit oberen Auffangkanten und von diesen vertikal beabstandete und sie quer zu den Rinnenabschnitten in Gebrauchslage in horizontaler Richtung zum Ableiten des Fettes in den jeweiligen Rinnenabschnitt überlappende, auflageseitige obere Ränder mit unteren Tropfkanten aufweisen, wobei die beiden sich jeweils gegenüberliegenden, eine Rinne seitlich begrenzenden oberen Flächen der Übergangsabschnitte nach oben zur Öffnungsseite der Rinne hin zunehmend voneinander beabstandet sind und wobei die beiden sich jeweils gegenüberliegenden unteren Flächen der eine Rinne seitlich begrenzenden Übergangsabschnitte nach unten zunehmend voneinander beabstandet sind.

Ein derartiger Grillrost ist in der WO 2008/019796 A1 als bekannt ausgewiesen. Dieser bekannte Grillrost besteht aus mindestens einem Gussteil, das eine rippenartige Struktur mit parallel zueinander verlaufenden Auffangrinnen für Fett und Bratensaft und dazwischen jeweils angeordnete erhabene Auflageabschnitte für das Grillgut aufweist. Die seitlichen Flanken der Rinnen in Form der Übergangsabschnitte zwischen dem Rinnengrund und den Auflageabschnitten sind zumindest auf einer Seite mit Durchbrüchen zum Durchleiten von von der Glut aufsteigenden Gasen zur Oberseite des Grillrostes und dem aufliegenden Grillgut versehen. Dabei sind die Durchbrüche über die Wandstärke der Übergangsabschnitte so ausgestaltet, dass am oberen Rand der Durchbrüche Abtropfkanten gebildet werden, die in vertikaler Richtung oberhalb von Auffangkanten des unteren Rands der Durchbrüche beabstandet sind, während bezüglich der horizontalen Richtung die Abtropfkanten mehr zu einer vertikalen Mittellängsebene der Rinnen versetzt sind als die Abfangkanten, so dass abtropfendes Fett nicht in die Glut gelangt, sondern im Rinnengrund gesammelt wird. Mit diesem Grillrost werden gute Grillergebnisse ohne in die Glut tropfendes und verbrennendes Fett erzielt, jedoch ist die Herstellung mit den so in besonderer Weise ausgebildeten Durchbrüchen aufwändig.

Die DE 196 09 364 A1 zeigt eine Grillpfanne, bei der im Auflagebereich des Grillgutes eine ähnliche rippenartige Struktur mit in Übergangsbereichen von einer Rinne zu dem Auflagebereich angeordneten Durchbrüchen mit Abtropfkante an dem zur Rinne hin gelegenen oberen Durchbruchsrand und Auffangkante an dem von der Rinne abgelegenen oberen Rand des unteren Randbereichs der Durchbrüche vorgesehen ist. Die exakte Ausführung der Durchbrüche über die Wandstärke der Übergangsbereiche ist auch hierbei schwierig.

Der Erfindung liegt die Aufgabe zugrunde, einen Grillrost der eingangs genannten Art bereit zu stellen, der ebenfalls ein sicheres Abfangen von herabtropfendem Fett auch im Bereich von Durchbrüchen gewährleistet, jedoch einfacher in der Herstellung ist.

Diese Aufgabe wird mit den Merkmalen des Anspruches 1 gelöst. Hierbei ist vorgesehen, dass im Bereich der Durchbrüche über deren Ausdehnung in Längsrichtung der Rinne die Abstandslinie zwischen Auffangkante und Tropfkante in einer vertikalen Querebene des Grillrostes im Gebrauchszustand um einen Kippwinkel von höchstens 45° gegen die Vertikale geneigt ist, wobei die Abstandslinie von der oberen Fläche des gegenüberliegenden Übergangsabschnittes nach oben hin zunehmend beabstandet ist und von der gegenüberliegenden unteren Fläche des benachbarten Übergangsabschnittes nach unten hin zunehmend beabstandet ist. Mit dieser Ausgestaltung können die Durchbrüche in den Flankenbereichen der Rinnen einfach hergestellt werden, ohne dass z. B. im Sandgussverfahren Kerne vorgesehen werden müssen. Die sich nach oben öffnenden Rinnen und nach unten öffnenden Hohlräume unterhalb der Auflageabschnitte grenzen auf diese Weise im Bereich der die Durchbrüche aufweisenden Flanken so aneinander, dass die komplementären Formabschnitte des oberen und unteren Formteils ohne Hinterschneidungen ausgestaltet werden können und die Durchbrüche ohne Kerne erhalten werden.

Ist vorgesehen, dass der Öffnungswinkel zwischen den oberen und unteren Flächen der jeweiligen benachbarten Übergangsabschnitte mindestens so groß ist wie der Öffnungswinkel zwischen der Abstandslinie und der zugewandten oberen oder unteren Fläche des benachbarten Übergangsabschnittes, wird eine besonders einfache und zuverlässige Entformbarkeit erreicht.

Eine vorteilhafte Maßnahme zum Herstellen im Sandgussverfahren besteht darin, dass ein Modell des Grillrostes schräg auf einer oberen bzw. einer unteren Formplatte in einem bestimmten Neigungswinkel gegenüber der Flächennormalen der Formplatte angebracht ist. Dabei ist der Neigungswinkel so gewählt, dass er zwischen dem Kippwinkel und der Summe aus dem Kippwinkel und dem Öffnungswinkel liegt. Beim Zusammenfügen des oberen und unteren Formkastens der Sandgussform berühren sich die Sandflächen im Bereich der Durchbrüche. Bei Herstellung im Kokillengussverfahren oder im Druckgussverfahren berühren sich die Flächen der betreffenden Werkzeuge an den Durchbrüchen. Kerne oder Schieber werden vermieden.

Wird dann der so hergestellte Grillrost in der üblichen horizontalen Gebrauchslage verwendet, liegt die obere Abtropfkante horizontal versetzt zum Inneren der Rinne gegenüber der unteren Abfangkante oberhalb von dieser, so dass abtropfendes Fett in dem unteren Rinnenbereich aufgefangen wird.

Zu guten Grillergebnissen tragen des Weiteren die Maßnahmen bei, dass in den Auflageabschnitten längs verlaufende Einmuldungen eingebracht sind.

Zum Sammeln der Bratensäfte und Abgeben der Aromastoffe an das Grillgut sind des Weiteren die Maßnahmen von Vorteil, dass in den Rinnen und/oder den Einmuldungen mittels Querstegen napfartige Vertiefungen ausgebildet sind.

Die Handhabung des Grillrostes beim Reinigen wird dadurch begünstigt, dass die Übergänge zwischen den Querstegen und den Einmuldungen und Rinnen gerundet sind.

Ein vorteilhaftes Fertigungsverfahren besteht in einem Sandgussverfahren zum Herstellen eines Grillrostes nach einem der vorhergehenden Ansprüche, wobei eine Modelloberseite und eine Modellunterseite hergestellt und mit ihren Flächennormalen n1 schräg auf einer oberen und einer unteren Formplatte unter einem bestimmten Neigungswinkel zur Flächennormalen der jeweiligen Formplatte aufgebracht werden, dass ein Formkasten aufgesetzt und mit Sand befüllt wird, der Formkasten abgenommen bzw. abgeschwenkt wird und die Formteile lagegenau zum Bilden der Sandgussform zusammengefügt werden. Der Neigungswinkel wird dabei so gewählt, dass er zwischen dem Kippwinkel und der Summe aus dem Kippwinkel und dem Öffnungswinkel liegt, also z. B. vorteilhaft etwa dem Winkel zwischen der Winkelhalbierenden eines Öffnungswinkels zwischen zwei das Rinneninnere begrenzenden Übergangsabschnitten und der Flächennormalen des Grillrostes bzw. der betreffenden Modellseite entspricht.

Die Erfindung wird nachfolgend unter Bezugnahme auf die Zeichnungen näher erläutert. Es zeigen:
- Fig. 1: einen Grillrost mit einem Gussteil in perspektivischer Ansicht,
- Fig. 2: einen Ausschnitt des Grillrostes nach Fig. 1 in perspektivischer Ansicht,
- Fig. 3: eine Draufsicht auf einen Abschnitt des Grillrostes mit verschiedenen Schnittlinien,
- Fig. 4: Querschnitte des Grillrosts entlang den in Fig. 3 gezeigten Schnittlinien A-A, B-B und C-C,
- Fig. 5: Querschnitte von Ausschnitten des Grillrosts entlang Schnittlinien D-D und E-E nach Fig. 3.

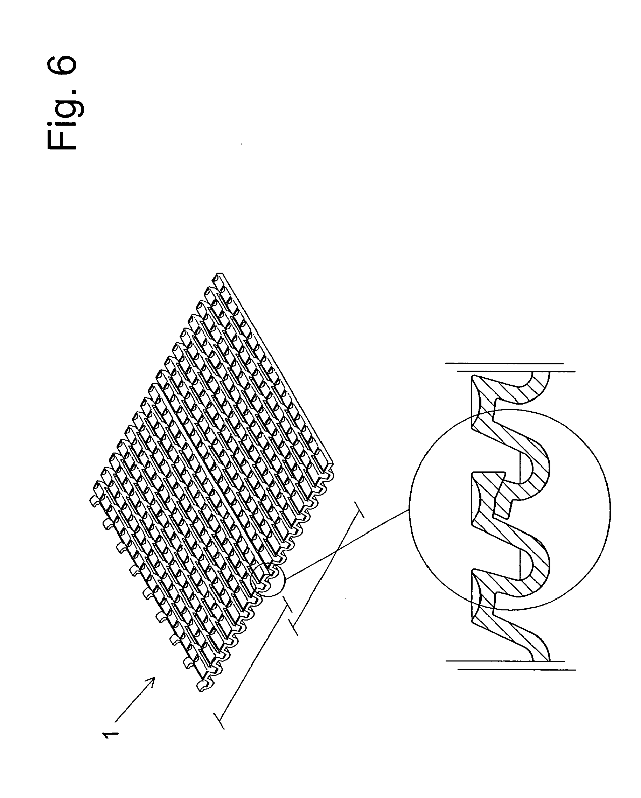

- Fig. 6: einen aus zwei Gussteilen zusammengesetzten Grillrost mit einer vergrößerten Darstellung im Übergangsbereich und
- Fig. 7: Herstellungsschritte für den Grillrost im Sandgussverfahren.

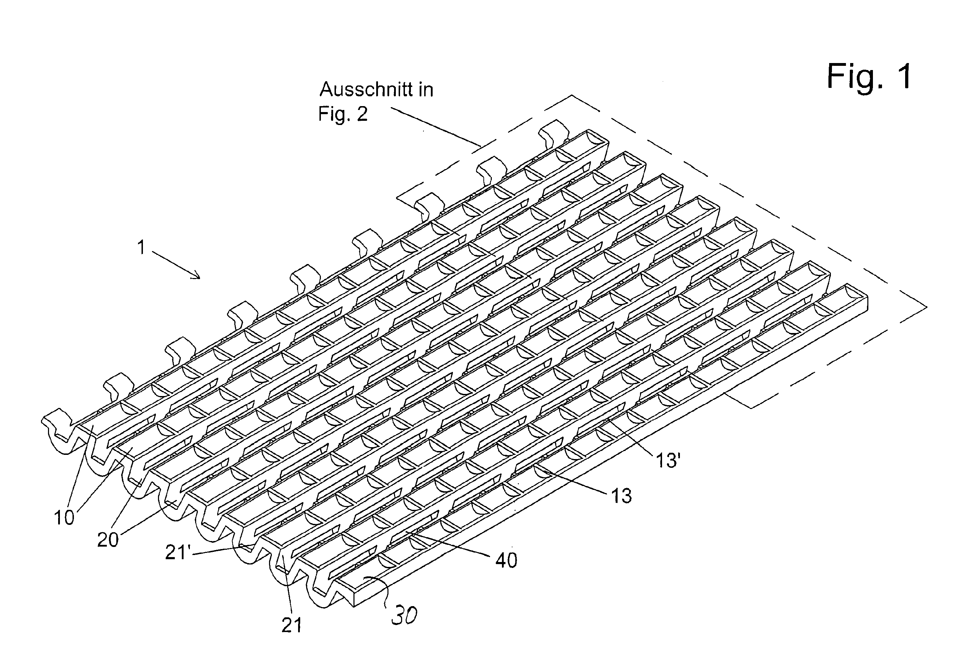

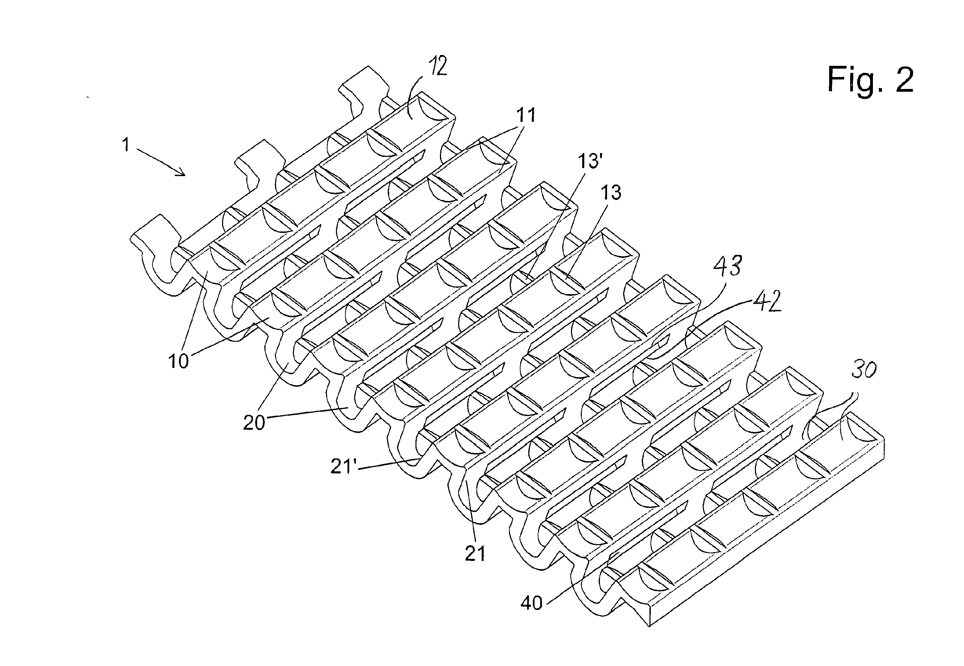

Fig. 1 zeigt einen Grillrost 1 mit einem Gussteil, das eine rippenartige Struktur mit längs verlaufenden Rinnen zum Auffangen von Fett und Bratensaft und jeweils dazwischen verlaufenden erhabenen Auflageabschnitten 10 zum Auflegen des Grillgutes aufweist. Die Rinnen bzw. Rinnenabschnitte 20 weisen mittels Querstegen 13' voneinander getrennte napfartige Abschnitte zum Speichern abtropfenden Fettes bzw. Bratensaftes auf. Auch in dem Auflageabschnitt 10 sind vorteilhaft in Längsrichtung verlaufende Einmuldungen 12 eingeformt, die seitlich von höckerförmigen Erhöhungen 11 begrenzt sind, so dass sich für aufgelegtes Grillgut lediglich schmale streifenartige Auflagerippen ergeben, zwischen denen sich ebenfalls Bratensaft und Fett ansammeln kann. Auch die längs verlaufenden Einmuldungen 12 sind mittels Querstegen 13 in napfartige Vertiefungen unterteilt. Des gleichen sind die Rinnen 20 und die Einmuldungen 12 an ihren stirnseitigen Enden mit entsprechenden Querstegen 13, 13' abgeschlossen. Zu den napfartigen Vertiefungen hin sind die Querstege 13, 13' ebenso wie die seitlichen Bereiche der Einmuldungen 12 und des Rinnengrundes gerundet, so dass eine einfache Reinigung auch im Bereich der napfartigen Vertiefungen 30 ermöglicht wird. Bei dem in Fig. 2 gezeigten vergrößerten Ausschnitt des Grillrostes 1 nach Fig. 1 sind die Rinnenabschnitte 20, die Einmuldungen 12 mit den höckerförmigen begrenzenden Erhöhungen 11 in den Auflageabschnitten 10 sowie die Querstege 13, 13' verdeutlicht. Aus zeichnerischen Gründen sind dabei die Rundungen im Bereich der Übergänge von den Querstegen 13, 13' zu den napfartigen Vertiefungen 30 nicht näher dargestellt.

Wie die Fig. 1 und 2 weiterhin zeigen, sind die Rinnen 20 in ihren Flankenbereichen, die Übergangsabschnitte 21, 21' zu den Auflageabschnitten 10 bilden, mit in Längsrichtung der Rinnen 20 ausgedehnten schlitzartigen Durchbrüchen versehen, durch die beim Gebrauch von der Glut aufsteigende Gase von der Unterseite des Grillrostes 1 zur Oberseite und zum dort aufliegenden Grillgut gelangen, um diesem den typischen Grillgeschmack zu vermitteln. Dabei sind die Durchbrüche 40 oberhalb der oberen Ränder der Querstege 13' angeordnet, so dass kein in den napfartigen Vertiefungen 30 gesammeltes Fett bzw. Bratensaft durch die Durchbrüche 40 in die Glut abfließen kann.

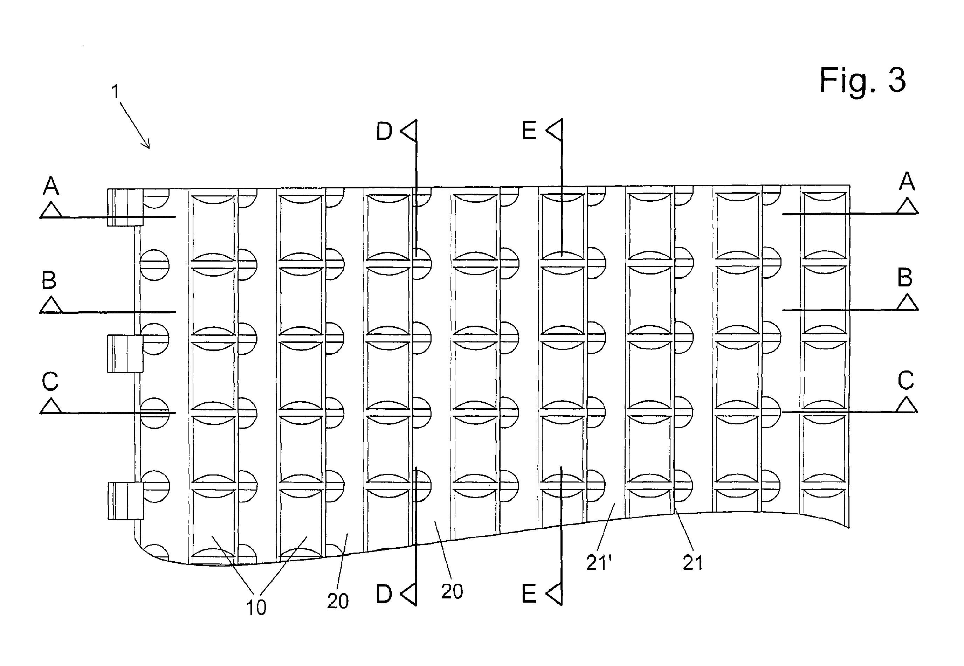

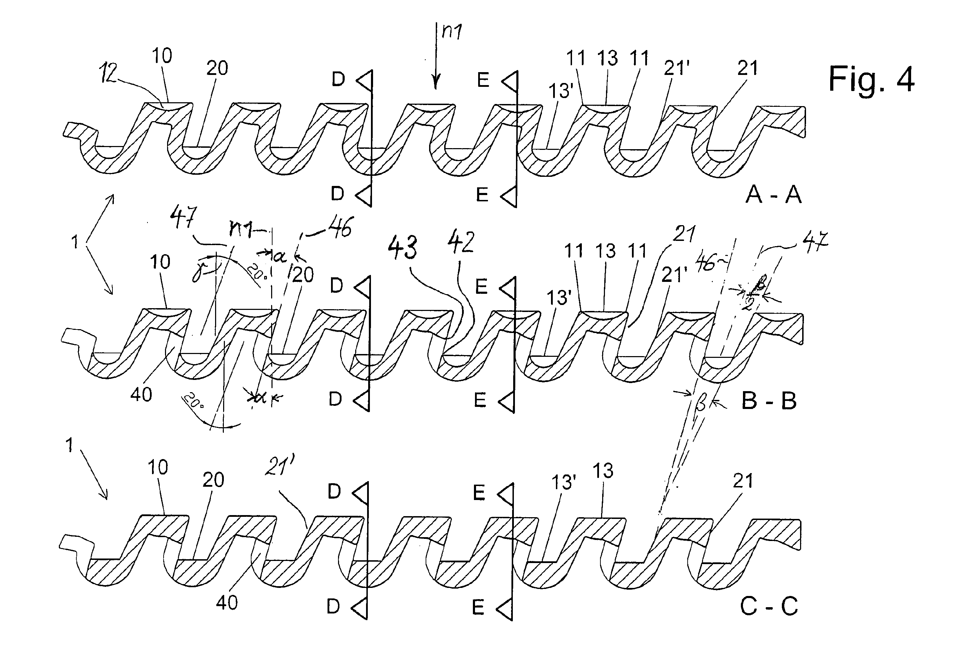

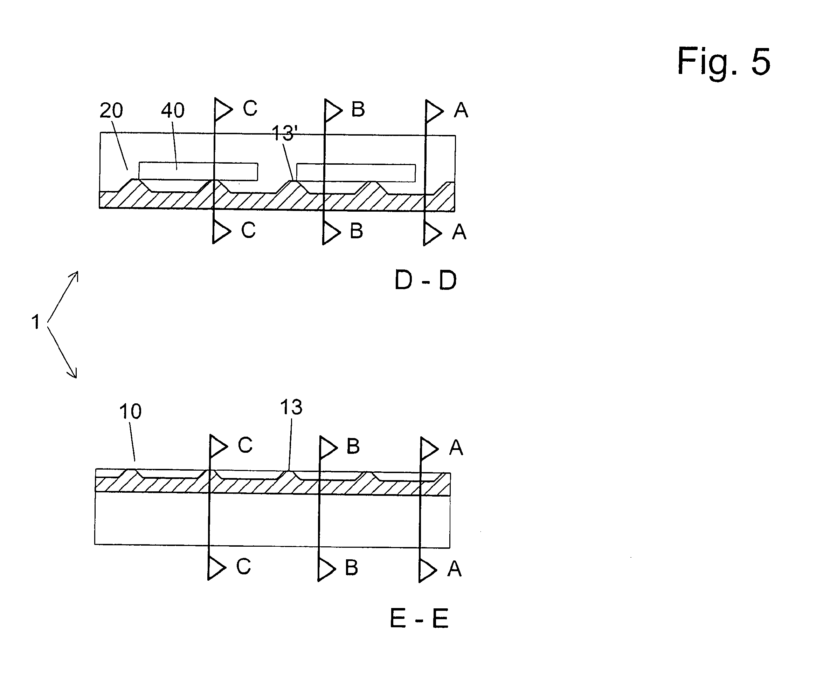

Die Fig. 3 bis 5 zeigen in Draufsicht und mehreren Schnittdarstellungen entlang gezeigter Schnittlinien die nähere Ausgestaltung eines Gussteils des Grillrostes 1. Demnach ist, wie die Draufsicht nach Fig. 3 zeigt, die dem Rinnenabschnitt 20 zugekehrte Oberseite an der einen Rinnenflanke, nämlich dem einen Übergangsabschnitt 21, in dem die Durchbrüche 40 der betreffenden Rinne 20 angeordnet sind, in der gezeigten Draufsicht in Normalenrichtung n1 überdeckt, während der gegenüberliegende Übergangsabschnitt 21' von oben frei einsehbar und zugänglich ist. Die im Querschnitt gegenüber der Flächennormalen n1 des Grillrostes 1 in gleichem Sinn aber unterschiedlich stark schräg ausgerichteten ersten und zweiten Übergangsabschnitte 21, 21' sind in den Querschnittsdarstellungen der Fig. 4 entlang den in Fig. 3 gezeigten Schnittlinien A-A, B-B und C-C näher dargestellt. Wie sämtliche Querschnittsdarstellungen zeigen, öffnen sich die Rinnen 20 nach oben hin, wobei der erste und der zweite Übergangsabschnitt 21, 21' nach oben hin zunehmend voneinander beabstandet sind. Der Übergangsabschnitt 21, der die Durchbrüche 40 aufweist, ist zum Inneren der Rinne hin gegenüber der Flächennormalen n1 geneigt, während der Übergangsabschnitt 21' ohne Durchbrüche 40 gegenüber der Flächennormalen n1 vom Inneren der Rinne 20 weg geneigt ist. Die Durchbrüche 40 sind an ihrem oberen Längsrand, der eine Tropfkante 43 bildet, in vertikaler (normaler) Richtung von der unteren Randkante des Durchbruchs 40, die eine Auffangkante 42 bildet, beabstandet und horizontal zum Rinneninneren hin versetzt, wobei die Abstandslinie 46 zwischen der Tropfkante 43 und der Auffangkante in einer vertikalen Querebene zur Vertikalen bzw. Flächennormalen n1 einen Kippwinkel α bildet, der z. B. mehr als 10°, vorteilhaft mehr als 20° beträgt. Auf diese Weise wird sichergestellt, dass von der Tropfkante 43 abtropfendes Fett rinnenseitig vor der Auffangkante 42 in den unteren Bereich der Rinne 20 abtropft und dort in den betreffenden napfartigen Vertiefungen 30 gesammelt wird. Im Übrigen ist die Neigung des ersten Übergangsabschnittes 21 gegenüber der Flächennormalen n1 höchstens so groß wie die Neigung der Abstandslinie 46.

Wie Fig. 4 weiter zeigt, ist auch der nach unten offene Hohlraum unterhalb des jeweiligen Auflageabschnittes 10 zwischen den ihn seitlich mit unteren Flächen begrenzenden Übergangsabschnitten 21, 21' nach unten sich zunehmend erweiternd geöffnet. Dies gilt auch für den Bereich der Durchbrüche 40, wie insbesondere aus der mittleren Querschnittsdarstellung entlang der Schnittlinie B-B ersichtlich. Dabei ist der Kippwinkel des die Durchbrüche 40 aufweisenden Übergangsabschnitts 21 unterhalb der Auffangkante 42 (über die Wandstärke des Übergangsabschnitts) gegenüber der Flächennormalen n1 höchstens so groß wie der Kippwinkel α zwischen der Abstandslinie 46 und der Flächennormalen n1. Hierdurch ergibt sich, dass im Bereich der Durchbrüche 40 die Übergangsabschnitte 21 auf ihrer der rinne 20 zugekehrten Oberseite und auf ihrer von der Rinne 20 abgekehrten Unterseite in der gleichen Ebene liegen und eine Herstellung mittels Formen, insbesondere mittels Sandgussform wesentlich vereinfacht wird, da sich die betreffenden Ebenen der oberen und unteren Formplatte dort berühren und beim Gießen ohne Kerne die Durchbrüche 40 entstehen.

Des Weiteren ist in Fig. 4 (mittlere Darstellung) auch ein Öffnungswinkel β zwischen den beiden Übergangsabschnitten 21, 21' im Inneren der Rinne dargestellt, der bei gleich bleibender Wandstärke der Übergangsabschnitte auch dem Öffnungswinkel der Hohlräume unterhalb der Auflageabschnitte 10 entspricht. Außerdem ist ein Winkel γ zwischen der Winkelhalbierenden des Öffnungswinkels β und der Flächennormalen n1 des Grillrostes 1 eingezeichnet, der für die Herstellung des Grillrostes 1 durch Formen von Bedeutung ist.

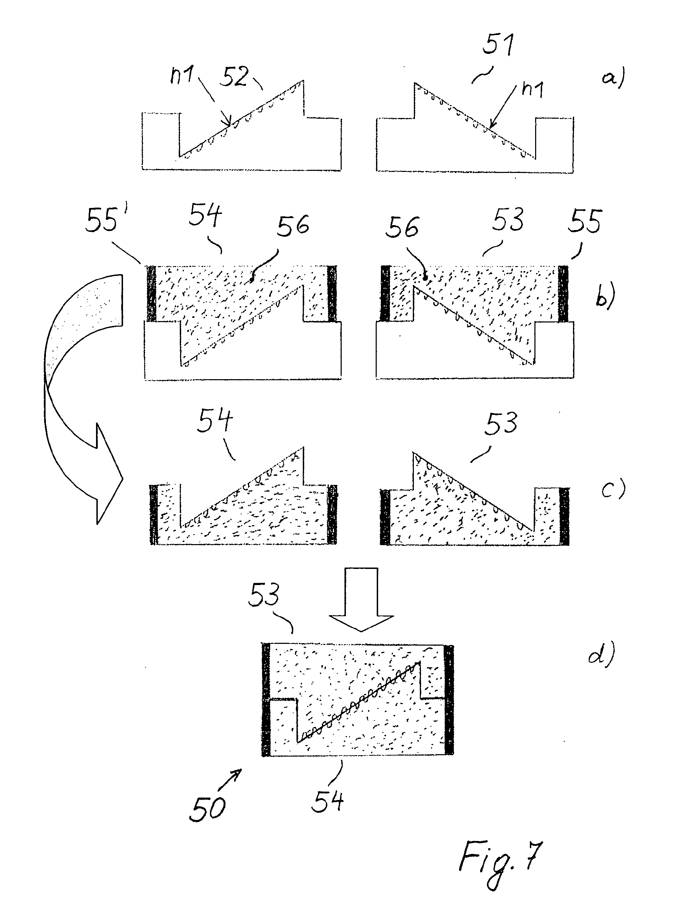

Fig. 7 zeigt schematisch ein Ausführungsbeispiel für die Herstellung eines Grillrostes 1 im Sandgussverfahren. Von dem Grillrost 1 wird ein Modell mit einer Modelloberseite 51 und einer Modellunterseite 52 hergestellt, die schräg bezüglich der Ebene einer Formplatte angeordnet werden, wie im Teilbild a) gezeigt, so dass die Flächennormale n1 der Ebene der Modelloberseite bzw. der Modellunterseite unter dem vorstehend beschriebenen Neigungswinkel zur Flächennormalen der jeweiligen Modellplatte schräg angeordnet sind, auf denen die Modelloberseite 51 bzw. die Modellunterseite 52 aufgesetzt werden. Dann wird ein Formkasten 55 bzw. 55' aufgesetzt und mit Formsand 56 befüllt, der sich insbesondere auch in die angedeuteten Rinnenabschnitte des Modells, insbesondere auch in den (hier nicht gezeigten) Ausformungen für die Durchbrüche hineinsetzt. Aufgrund der Schrägstellung unter dem angegebenen Neigungswinkel öffnen sich die Rinnen in der Modelloberseite 51 und der Modellunterseite 52 jeweils zunehmend nach oben bezüglich der absoluten Vertikalen, in der auch die Flächennormale der Formplatten ausgerichtet sind. Da somit keine Überdeckungen der Rinnenflanken beim Abheben des jeweiligen Formkastens 55, 55' im Rinnenbereich einschließlich des Bereichs der später zu bildenden Durchbrüche vorliegen, können die Formkästen ohne Weiteres senkrecht in Richtung der absoluten Vertikalen abgehoben bzw. abgeschwenkt werden, um ein oberes Formteil 53 und ein unteres Formteil 54 zu bilden, wie in Teilbild c) gezeigt. Anschließend werden das obere und das untere Formteil 53, 54 zu der Sandgussform zusammengefügt, in die das Gussmaterial zum Herstellen des Grillrostes 1 eingefüllt wird. Da im Bereich der Durchbrüche die Sandflächen des oberen Formteils 53 und des unteren Formteils 54 sich berühren, werden die Durchbrüche in dem Grillrost 1 erhalten, ohne dass bei der Herstellung Kerne verwendet werden. Indes ergibt sich beim Gebrauch des Grillrostes in im Wesentlichen horizontaler Lage (im rechten Winkel zur Schwerkraftrichtung) die gewünschte horizontale Überlappung der oberen Abtropfkante bezüglich der unteren Abfangkante der Auffangrinne.

Die Durchbrüche 40 werden in der genannten Ausgestaltung erhalten, ohne dass Hinterschneidungen vorliegen und ohne dass z. B. Kerne benötigt werden. Dadurch ergibt sich eine einfache Herstellung, insbesondere beim Sandgussverfahren, aber auch bei anderen Gießverfahren.

## Patentansprüche

1. Grillrost aus einem oder mehreren Gussteilen in rippenartiger Struktur mit erhabenen Auflageabschnitten (10) für das Grillgut (2) und in Breitenrichtung jeweils dazwischen liegenden Rinnenabschnitten (20) zum Auffangen abtropfenden Fettes (4) sowie in Übergangsabschnitten (21, 21') in einem Flankenbereich zwischen den Auflageabschnitten (10) und den Rinnenabschnitten (20) angeordneten Durchbrüchen (40) zum Herstellen einer Strömungsverbindung für von der Glut (3) aufsteigende Gase (5) zur Oberseite des Grillrostes (1), wobei die Durchbrüche (40) untere Ränder mit oberen Auffangkanten (42) und von diesen vertikal beabstandete und sie quer zu den Rinnenabschnitten (20) in Gebrauchslage in horizontaler Richtung zum Ableiten des Fettes in den jeweiligen Rinnenabschnitt überlappende, auflageseitige obere Ränder mit unteren Tropfkanten (43) aufweisen, wobei die beiden sich jeweils gegenüberliegenden, eine Rinne seitlich begrenzenden oberen Flächen der Übergangsabschnitte (21, 21') nach oben zur Öffnungsseite der Rinne hin zunehmend voneinander beabstandet sind und wobei die beiden sich jeweils gegenüberliegenden unteren Flächen der eine Rinne seitlich begrenzenden Übergangsabschnitte (21, 21') nach unten zunehmend voneinander beabstandet sind,
**dadurch gekennzeichnet,**
**dass** im Bereich der Durchbrüche (40) über deren Ausdehnung in Längsrichtung der Rinne die Abstandslinie (46) zwischen Auffangkante (42) und Tropfkante (43) in einer vertikalen Querebene des Grillrostes im Gebrauchszustand um einen Kippwinkel (α) von höchstens 45° gegen die Flächennormale (n1) geneigt ist, wobei die Abstandslinie (46) von der oberen Fläche des gegenüberliegenden Übergangsabschnittes (21') nach oben hin zunehmend beabstandet ist und von der gegenüberliegenden unteren Fläche des benachbarten Übergangsabschnittes (21') nach unten hin zunehmend beabstandet ist.

2. Grillrost nach Anspruch 1,
**dadurch gekennzeichnet,**
**dass** der Öffnungswinkel (β) zwischen den oberen und unteren Flächen der jeweiligen benachbarten Übergangsabschnitte (21, 21') mindestens so groß ist wie der Öffnungswinkel zwischen der Abstandslinie (46) und der zugewandten oberen oder unteren Fläche des benachbarten Übergangsabschnittes (21').

3. Grillrost nach einem der vorhergehenden Ansprüche,
**dadurch gekennzeichnet,**
**dass** in den Auflageabschnitten (10) längs verlaufende Einmuldungen (12) eingebracht sind.

4. Grillrost nach einem der vorhergehenden Ansprüche,
**dadurch gekennzeichnet,**
**dass** in den Rinnen und/oder den Einmuldungen (12) mittels Querstegen (13, 13') napfartige Vertiefungen ausgebildet sind.

5. Grillrost nach Anspruch 4,
**dadurch gekennzeichnet,**
**dass** die Übergänge zwischen den Querstegen (13, 13') und den Einmuldungen (12) und Rinnen gerundet sind.

6. Sandgussverfahren zum Herstellen eines Grillrostes nach einem der vorhergehenden Ansprüche, wobei ein Modell des Grillrostes mit einer Modelloberseite und einer Modellunterseite gefertigt und mit ihren Flächennormalen (n1) schräg auf einer zugeordneten oberen und einer zugeordneten unteren Formplatte unter einem bestimmten Neigungswinkel zur Flächennormalen der jeweiligen Formplatte aufgebracht werden, wobei der Neigungswinkel so gewählt wird, dass er mindestens dem Kippwinkel (α) und höchstens der Summe aus dem Kippwinkel (α) und dem Öffnungswinkel (β) entspricht, dass ein Formkasten aufgesetzt und mit Sand befüllt wird, der Formkasten abgenommen wird und die Formteile zum Bilden der Sandgussform zusammengesetzt werden.
